# EUROPEAN PATENT SPECIFICATION

(11) **EP 3 495 373 B1**
(45) Date of publication and mention of the grant of the patent: **20.01.2021**
(21) Application number: 18210898.5
(22) Date of filing: 06.12.2018
(51) Int. Cl.: C07F 7/08, C08G 77/06

(54) **HYDROCARBYLOXYDISILANES**
HYDROCARBYLOXYDISILANE
HYDROCARBYLOXYDISILANES

(30) Priority: 08.12.2017 US 201762596202 P
(43) Date of publication of application: 12.06.2019
(73) Proprietor: Dow Silicones Corporation, Midland, MI 48686-0994 (US)
(72) Inventor: REKKEN, Brian D., Midland, MI 48640 (US); ZHOU, Xiaobing, Midland, MI 48640 (US)
(74) Representative: Houghton, Mark Phillip

(56) References cited:
- EP-A1- 1 717 848
- EP-A1- 2 913 334
- DE-A1-102006 029 077
- US-A- 4 395 564
- US-A- 4 546 008
- US-A1- 2008 241 748
- US-A1- 2016 148 800
- H Wada: "Fluxional Behavior of Alkoxy-Bridged Bis(silylene)ruthenium Complexes Cp*(Me3P)Ru{SiMe2...O(R)...SiMe2}(R = Me,tBu) Caused by Rotation of the Silylene Ligands", Chemistry Lett., 1 January 1998 (1998-01-01), pages 993-994, XP055664140, & Hiroaki Wada ET AL: "Fluxional Behavior of Alkoxy-Bridged Bis(silylene)ruthenium Complexes Cp * (Me 3 P)Ru{SiMe 2 ...O(R)...SiMe 2 }(R = Me, t Bu) Caused by Rotation of the Silylene Ligands", Chemistry Letters, vol. 27, no. 10, 1 October 1998 (1998-10-01), pages 993-994, XP055663349, JAPAN ISSN: 0366-7022, DOI: 10.1246/cl.1998.993
- F Feher: "Beiträge zur Chemie des Siliciums und Germaniums. XXXI [1]. Die photochemische Darstellung neuer Isopropoxyderivate des Tri-, n-Tetra-, iso-Tetra- und n-Pentasilans und deren saure Hydrolyse zu Bis-Silanyl-Äthern", Zeitschrift fur Anorganische und Allgemeine Chemie, vol. 466, 1 January 1980 (1980-01-01), pages 29-35, XP055688561, DOI: https://onlinelibrary.wiley.com/doi/10.100 2/zaac.19804660104

## Description

### FIELD OF THE INVENTION

The present invention relates, generally, to a method of making hydrocarbyloxydisilanes according to the formula Si₂(OR³)_{y}H_{6-y}, where y is 1-5 and R³ is hydrocarbyl having from 1 to 10 carbon atoms.

### BACKGROUND OF THE INVENTION

Alkoxysilanes have many uses. They can be used in many applications from the manufacture of tires to being intermediates in making different silanes and siloxanes. Different silanes offer different benefits in the various applications. These differences in performance can be related to such characteristics of a silane such as the different silicon-bonded groups, the molecular weight of the silane, and the degree of polymerization.

Some alkoxydisilanes have been made. For example, monomethoxydisilane and 1,1,2-trimethoxydisilane have been reported.

EP-A1-1717848 discloses a method for producing silicon dioxide film. US 456008 discloses a method for forming a deposition film. DE-A1-10 2006 029077 discloses synthesis of a compound with silicon atom comprising reacting atomic silicon with different substrate molecules at low temperature, without using a catalyst. US 2008/0241748 discloses etch-resistant disilane and saturated hydrocarbon bridged silicon-containing polymers. US-A-2006/0148800 discloses selective inhibition in atomic layer deposition of silicon-containing films. EP-A1-2913334 discloses organoaminosilanes. US 4395564 discloses a process for the preparation of alkoxyhydridosilanes.

Currently available hydrocarbyloxydisilanes may have some drawbacks in some applications and uses, therefore, there is a need for new silanes with improved or different properties that can be exploited in current or new applications and used to make new silicon-containing materials from these silanes.

### BRIEF SUMMARY OF THE INVENTION

The present invention is directed to a method of making a hydrocarbyloxydisilane, the method comprising: causing the reaction of
i) a hydrocarbylaminodisilane of formula (III)

   (III) (R¹ₐ(H)₂₋ₐN)_{b}Si(H)_{3-b}Si(H)_{3-c}(N(H)₂₋ₐR¹ₐ)_{c}

   where each a independently is 1 or 2, b is 1 to 3, c is 0 to 3, and each R¹ is independently is (C₁-C₁₀)hydrocarbyl, and
ii) an alcohol according to formula (II)

   (II) R²OH
where R² is hydrocarbyl having from 1 to 10 carbon atoms,
to form a product mixture comprising the hydrocarbyloxydisilane, wherein the hydrocarbyloxydisilane has the formula (IV)

(IV) Si₂(OR³)_{y}H_{6-y};

where y is 1-5 and R³ is hydrocarbyl having from 1 to 10 carbon atoms.

The method of making hydrocarbyloxydisilanes offers potentially better performance in applications for such silanes such as tire additives and precursors for making materials such as siloxane and polysiloxanes. However, additional applications for the hydrocarbyloxydisilanes are also possible and are not to be limited to such uses.

### DETAILED DESCRIPTION OF THE INVENTION

The invention embodiments, uses and advantages summarized above are further described below.

Aspects of the invention are described herein using various common conventions. For example, all states of matter are determined at 25° C. and 101.3 kPa unless indicated otherwise. All % are by weight unless otherwise noted or indicated. All % values are, unless otherwise noted, based on total amount of all ingredients used to synthesize or make the composition, which adds up to 100 %.

Aspects of the invention are described herein using various patent terms. For example, "alternatively" indicates a different and distinct embodiment. "Comparative example" means a non-invention experiment. "Comprises" and its variants (comprising, comprised of) are open ended. "Consists of" and its variants (consisting of) is closed ended. "Contacting" means bringing into physical contact. "May" confers a choice, not an imperative. "Optionally" means is absent, alternatively is present.

The term "disilane" in a chemical term is intended to mean a compound comprising two silicon atoms bonded to each other.

Aspects of the invention are described herein using various chemical terms. The meanings of said terms correspond to their definitions promulgated by IUPAC unless otherwise defined herein. For convenience, certain chemical terms are defined.

The hydrocarbylaminodisilane i) is according to formula (III)

(III) (R¹ₐ(H)₂₋ₐN)_{b}Si(H)_{3-b}Si(H)_{3-c}(N(H)₂₋ₐR¹ₐ)_{c}

where each a independently is 1 or 2, alternatively 2, b is 1 to 3, alternatively 1 or 2, alternatively 1, alternatively 2, c is 0 to 3, alternatively 0 to 2, alternatively 0 or 1, and each R¹ is independently is (C₁-C₁₀)hydrocarbyl.

Groups represented by R¹ have from 1 to 10, alternatively 1 to 7, alternatively 3 to 7, alternatively 3, alternatively 7, carbon atoms. Acyclic hydrocarbyl groups containing at least 3 carbon atoms can have a branched or unbranched structure. Examples of groups represented by R¹ include, but are not limited to, alkyl, such as methyl, ethyl, propyl, 1-methylethyl, butyl, pentyl, hexyl, octyl, nonyl, and decyl, and their isomers; cycloalkyl, such as cyclopentyl, cyclohexyl, methylcyclohexyl; aryl, such as phenyl, and naphthyl; alkaryl such as methylphenyl, where the methyl can be in ortho, meta, or para position, alternatively the ortho position, tolyl and xylyl; aralkyl, such as benzyl and phenethyl; alkenyl, such as vinyl, allyl, propenyl, butenyl, hexenyl, and octenyl; arylalkenyl, such as styryl and cinnamyl; and alkynyl, such as ethynyl and proynyl.. In one embodiment R¹ is propyl, alternatively isopropyl, alternatively o-methylphenyl.

Examples of the hydrocarbylaminodisilane include, but are not limited to, dimethylaminodisilane, diethylaminodisilane, diisopropylaminodisilane, dipropylaminodisilane, dibutylaminodisilane, diisobutylaminodisilane, isobutylaminodisilane, t-butylaminodisilane, pentylaminodisilane, cyclohexylaminodisilane, octylaminodisilane, and o-methylphenylaminodisilane. In one embodiment, the hydrocarbylaminodisilane is dipropylaminodisilane, diisopropylaminodisilane or o-methylphenylaminodisilane, alternatively diisopropylaminodisilane or o-methylphenylaminodisilane, alternatively diisopropylaminodisilane, alternatively o-methylphenylaminodisilane.

The hydrocarbylaminodisilane is made by methods known in the art for making hydrocarbylaminodisilanes. For example, diisopropylaminodisilane may be made by reacting a metal dialkylamide with hexachlorodisilane followed by reduction with metal aluminum hydride. Further, the hydrocarbylaminodisilane may be made by transamination with another hydrocaryblaminodisilane. Also, the hydrocarbylaminodisilane may be available commercially. For example, 1,2-bis(diisopropylamino)disilane is available from Nova-Kem, LLC.

The alcohol ii) is according to formula (II)

(II) R²OH;

where R² is hydrocarbyl having from 1 to 10, alternatively 1 to 6 carbon atoms, alternatively 2 to 4, alternatively 3 carbon atoms. Acyclic hydrocarbyl groups containing at least 3 carbon atoms can have a branched or unbranched structure.

Groups represented by R² include, but are not limited to, alkyl, such as methyl, ethyl, propyl, 1-methylethyl, butyl, pentyl, hexyl, octyl, nonyl, and decyl, and their isomers; cycloalkyl, such as cyclopentyl, cyclohexyl, methylcyclohexyl; aryl, such as phenyl, and naphthyl; alkaryl such as methylphenyl, where the methyl can be in ortho, meta, or para position, alternatively the ortho position, tolyl and xylyl; aralkyl, such as benzyl and phenethyl; alkenyl, such as vinyl, allyl, propenyl, butenyl, hexenyl, and octenyl; arylalkenyl, such as styryl and cinnamyl; and alkynyl, such as ethynyl and proynyl.. In one embodiment R² is ethyl, propyl, isopropyl, or butyl alternatively, ethyl, isopropyl or *t*-butyl.

Examples of the alcohol include, but are not limited to, ethanol, propanol, isopropanol, butanol, or *t*-butanol, pentanol, hexanol, cyclohexanol, heptanol, octanol, nonanol, and decanol. In one embodiment the alcohol is selected from the group consisting of ethanol, isopropanol, and *t*-butanol.

The method of the invention may further comprise a solvent. The solvent may be any solvent that solubilizes the alcohol and the hydrocarbylaminodisilane but does not react with either, alternatively an aromatic hydrocarbon, aliphatic hydrocarbon, or non-aliphatic hydrocarbon that solubilizes the alcohol and the hydrocarbylaminodisilane but does not react with either, alternatively an aromatic hydrocarbon, aliphatic hydrocarbon, or non-aliphatic hydrocarbon having from 5 to 20, alternatively 5 to 17, carbon atoms, and that solubilizes the alcohol and the hydrocarbylaminodisilane but does not react with either, alternatively an aromatic hydrocarbon or aliphatic hydrocarbon having from 5 to 20, alternatively 5 to 17, carbon atoms and that solubilizes the alcohol and the hydrocarbylaminodisilane but does not react with either. The solvent may be a mixture of two or more solvents.

Examples of the solvent include, but are not limited to benzene, diisopropylbenzene, isopentane, n-pentane, hexane, cyclohexane, heptane, octane, heptadecane and a mixture of heptadecane and n-pentane.

The method of the invention is conducted in a reactor suitable for the reaction of an alcohol and an hydrocarbylaminodisilane. For example, the method may be conducted in a three-neck, jacketed vessel or flask fitted with a thermowell, gas adaptor, addition funnel and a mixer, such as a magnetic stirring bar or overhead mixer. A means to vent any resultant hydrogen gas evolution may be included in the reactor design. In one embodiment, the reactor design includes gas adaptor and a gas manifold or other means to safely remove hydrogen gas during the method of the invention. One skilled in the art would know the type of reactor required to complete the method of the invention.

The alcohol and the hydrocarbylaminodisilane are caused to react. In one embodiment, the reaction of the alcohol and the hydrocarbylaminodisilane is caused by combining the alcohol and the hydrocarbylaminodisilane at alkoxylation sufficient conditions. Alkoxylation sufficient conditions are temperature and pressure conditions sufficient for the alcohol and the hydrocarbylaminodisilane to react, alternatively at temperature less than 30 °C, alternatively less than 20°C, alternatively less than -10 °C, alternatively from -30 °C to - 15°C, and at a pressure from sub-atmospheric to super-atmospheric, alternatively from sub-atmospheric to atmospheric, alternatively sub-atmospheric, alternatively from -4 to 0 KPa, alternatively -3 to -2 KPa. One skilled in the art will know how to modify the temperature and pressure conditions based on the disclosure to optimize the product of the hydrocarbyloxydisilane.

In one embodiment, the alcohol is added to the hydrocarbylaminodisilane with mixing at alkoxylation sufficient conditions. In another embodiment, the alcohol is added to the hydrocarbylaminodisilane at temperature less than 20°C, alternatively less than -10 °C, alternatively from -30 °C to -15 °C, to form a reaction mixture comprising the alcohol and the hydrocarbylaminodisilane followed by warming the reaction mixture to above 15°C, alternatively to about 25 °C, alternatively from 20-35 °C, with mixing.

The method of the invention is conducted until the hydrocarbyloxydisilane is produced, alternatively until the production of the hydrocarbyloxydisilane ceases, alternatively for at least 10 days, alternatively up to 5 days, alternatively for up to 8 hours. One skilled in the art would know how to monitor the production of the alkoxydisilane. For example, the production of hydrocarbyloxydisilane can be monitored by monitoring the quantity of the alcohol, hydrocarbylaminodisilane, and/or hydrocarbyloxydisilane in the reaction mixture and/or product mixture comprising the hydrocarbyloxydisilane. The amount of alcohol, hydrocarbylaminodisilane, and alkoxydisilane can be monitored using analytical techniques known in the art. For example, chromatography such as gas chromatography (GC), GC/mass spectrometry, or GC-FID (Flame ionization detector). The reaction may also be monitored by measuring hydrogen gas evolution during alcoholysis using, for example, a flow meter.

The alcohol and the hydrocarbylaminodisilane are combined by adding the alcohol to the hydrocarbylaminodisilane or by adding the hydrocarbylaminodisilane to the alcohol. When the alcohol is added to the hydrocarbylaminodisilane, the rate of addition can vary, alternatively the alcohol is added slowly to the hydrocarbylaminodisilane while monitoring the temperature of the reaction to avoid an uncontrollable exotherm, alternatively the alcohol is added to the hydrocarbylaminodisilane over ≥ 30, alternatively ≥ 60, alternatively ≥ 120, minutes, alternatively 2 to 8 hours. In one embodiment the alcohol is added to the hydrocarbylaminodisilane at a rate sufficient so that the temperature of the alcohol and hydrocarbylaminodisilane stays within 10 °C of the temperature of the hydrocarbylaminodisilane when the addition of alcohol to the hydrocarbylaminodisilane was started. In one embodiment, R² is methyl, ethyl, or propyl, and the alcohol and hydrocarbylaminodisilane are combined by adding the alcohol to the hydrocarbylaminodisilane

In embodiments of the method comprising a solvent, the alcohol is combined with the solvent to form an alcohol-solvent mixture, alternatively the hydrocarbylaminodisilane is combined with the solvent to form a hydrocarbylaminodisilane-solvent mixture, alternatively the alcohol and solvent are combined to form an alcohol-solvent mixture and the hydrocarbylaminodisilane and solvent are combined to form an hydrocarbylaminodisilane-solvent mixture and then the alcohol-solvent mixture is added to the hydrocarbylaminodisilane-solvent mixture.

The molar ratio of the alcohol to hydrocarbylaminodisilane is modified to adjust the addition of the alcohol to the hydrocarbylaminodisilane. In one embodiment, the alcohol is added in stoichiometric excess compared to the hydrocarbylaminodisilane, alternatively the mole ratio of alcohol to hydrocarbylaminodisilane is from 1.5 to 4, alternatively from 1.5 to 3.5, alternatively from 1.5 to 3.3. In one embodiment, the alcohol is methanol, the hydrocarbylaminodisilane is diisopropylaminodisilane, and the mole ratio of methanol to diisopropylaminodisilane is from 2.5 to 3, alternatively about 2.6. In another embodiment, the alcohol is ethanol and the hydrocarbylaminodisilane is diisopropylaminodisilane and the mole ratio of ethanol to diisopropylaminodisilane is from 2.75 to 3.25, alternatively 3 to 3.1, alternatively about 3.03. In another embodiment, the alcohol is isopropanol, the hydrocarbylaminodisilane is diisopropylaminodisilane, and the mole ratio of isopropanol to diisopropylaminodisilane is from 1 to 2, alternatively 1.4. to 1.8, alternatively about 1.6. In another embodiment, the alcohol is *tert(t)*-butanol, the hydrocarbylaminodisilane is diisopropylaminodisilane, and the mole ratio of *(t)*-butanol to diisopropylaminodisilane is from 0.75 to 1.25, alternatively 2.9. to 1.1, alternatively about 1. In another embodiment, the alcohol is *tert(t)*-butanol, the hydrocarbylaminodisilane is 1,2-bis(diisopropylamino)disilane, and the mole ratio of *tert(t)*-butanol to 1,2-bis(diisopropylamino)disilane is from 1.75 to 2.25, alternatively 1.9. to 2.1, alternatively about 2.

In embodiments including the alcohol-solvent mixture, the alcohol and solvent are combined in a weight ratio of alcohol/solvent of from 0.1 to 10, alternatively from 0.1 to 5, alternatively from 0.25 to 1.

In embodiments including the hydrocarbylaminodisilane-solvent mixture, the hydrocarbylaminodisilane and solvent are combined in a weight ratio of hydrocarbylaminodisilane/solvent of from 0.1 to 10, alternatively from 0.1 to 5, alternatively from 0.2 to 0.7.

The method of the invention may further comprise heating the reaction mixture. The heating may be accomplished by exposing the reactor and reactants to ambient conditions over time, alternatively the reactants may be heated by conventional methods and apparatuses known the art such as with a steam jacket or heating mantle.

In one embodiment, the method of the invention further comprises heating the hydrocarbyloxydisilane formed by the reaction of the alcohol and the hydrocarbylaminodisilane to cause a rearrangement of the alkoxy groups of the hydrocarbyloxydisilane to form a rearranged hydrocarbyloxydisilane. In one embodiment, 1,2-di-*t*-butoxydisilane is heated to produce 1,1-di-*t*-butoxydisilane.

The heating of the hydrocarbyloxydisilane to cause the rearrangement of the alkoxy groups is to a rearrangement sufficient temperature. As used herein, a "rearrangement sufficient temperature is a temperature sufficient to cause the rearrangement of the alkoxy groups of the hydrocarbyloxydisilane to form the rearranged hydrocarbyloxydisilane, alternatively a temperature from ambient to 130 °C, alternatively ambient to 105 °C, alternatively up to 130 °C, alternatively from 40 to 100 °C. The rearrangement typically proceeds in a shorter time as the temperature is increases, with the rearrangement proceeding over days at around ambient temperature and a matter of hours at temperatures around 100 °C. When the heating is to ambient temperature, the reactants begin at temperatures below ambient temperature. The rearrangement may be conducted at the same pressures in the same reactors as described above.

The method of the invention may further comprise recovering the hydrocarbyloxydisilane. The hydrocarbyloxydisilane may be recovered by methods known in the art such as distillation or chromatography. One skilled in the art would know how to recover the hydrocarbyloxydisilane.

The hydrocarbyloxydisilane formed by the method of the invention is an hydrocarbyloxydisilane according to formula (IV)

(IV) Si₂(OR³)_{y}H_{6-y}

where y is 1-5, alternatively 2-4, alternatively 3, and R³ is hydrocarbyl having from 1 to 10 carbon atoms.

Hydrocarbyl groups represented by R³ have from 1 to 10, alternatively 1 to 5, alternatively 1 to 4, carbon atoms. Acyclic hydrocarbyl groups containing at least 3 carbon atoms can have a branched or unbranched structure. Examples of groups represented by R³ include, but are not limited to, alkyl, such as methyl, ethyl, propyl, 1-methylethyl, butyl, pentyl, hexyl, octyl, nonyl, and decyl, and their isomers; cycloalkyl, such as cyclopentyl, cyclohexyl, methylcyclohexyl; aryl, such as phenyl, and naphthyl; alkaryl such as methylphenyl, where the methyl can be in ortho, meta, or para position, alternatively the ortho position, tolyl and xylyl; aralkyl, such as benzyl and phenethyl; alkenyl, such as vinyl, allyl, propenyl, butenyl, hexenyl, and octenyl; arylalkenyl, such as styryl and cinnamyl; and alkynyl, such as ethynyl and proynyl. In one embodiment, R³ is methyl, ethyl, propyl, or butyl, alternatively methyl, ethyl, propyl, or *t*-butyl, alternatively methyl, ethyl, isopropyl, or *t*-butyl.

Examples of the hydrocarbyloxydisilane (IV) include, but are not limited to, those described above, alternatively 1,1,1-trimethoxydisilane, 1,1,1,2-tetramethoxydisilane, 1,1,1-triethoxysilane, 1,1,1,2-tetraethoxydisilane, 1,1,1,2,2-pentamethoxydisilane, *t*-butoxydisilane, 1,2-di-*t*-butoxydisilane, and 1,1-di-*t*-butoxydisilane.

In one embodiment, the hydrocarbyloxydisilane is hydrolyzed and condensed to form a polysiloxane. For example, a hydrolysis sufficient amount of water is added to the hydrocarbyloxydisilane under hydrolysis conditions to form a polysiloxane. One skilled in the art would know how to optimize the amount of water and the conditions sufficient to hydrolyze the hydrocarbyloxydisilanes according the invention.

The method of the invention may also produce gas, alternatively hydrogen, as a byproduct. In one embodiment, the method further comprises removing hydrogen gas as it is produced during the method. One skilled in the art would know how to remove hydrogen gas during the method. For example, the hydrogen gas may be removed, or vented, as produced through a gas adaptor, and may be transported for further processing.

The method of the invention may also produce an alkylamine, alternatively a dialkylamine, byproduct. The alkylamine is according to the formula R¹_{c}(H)_{3-c}N, wherein R¹ is as defined above, and c is 1 or 2, alternatively 2. In one embodiment, the method of the invention further comprises recovering the alkylamine. The alkylamine may be recovered in the same process used to recover the hydrocarbyloxydisilane. In one embodiment, the alkylamine may be recovered by distillation.

The hydrocarbyloxydisilane made according to the invention may be used as an additive in making products. For example the hydrocarbyloxydisilane may be used as an additive in tire formulations alone or as a modifier for silica filler. The method of the invention is useful for making the hydrocarbyloxydisilane.

### EXAMPLES

The following examples are presented to better illustrate the method of the present invention, but are not to be considered as limiting the invention, which is delineated in the appended claims. Unless otherwise noted, all parts and percentages reported in the examples are by weight. The following Table 1 describes abbreviations used in the examples:

**Table 1. List of abbreviations used in the examples.**

| **Abbreviation** | **Word** | **Abbreviation** | **Word** |
|---|---|---|---|
| g | gram | EtOH | Ethanol |
| Me | methyl | MeOH | Methanol |
| wt | weight | *t*-BuOH | *tert*-butanol |
| % | percent | DiPB | Diisopropylbenzene |
| mmol | millimole | DPDS | Diisopropylaminodisilane |
| mol | mole | TMODS | 1,1,1-trimethoxydisilane |
| hr | hour | TEODS | 1,1,1-triethoxydisilane |
| °C | degrees Celsius | BODS | *Tert*-butoxydisilane |
| NA | Not Applicable | 1,1-BBODS | 1,1-Bis-(*tert*-butoxy)disilane |
| mL | milliliters | iPODS | *Iso*-propoxydisilane |
| in | inches | BiPODS | 1,1-Bis(*iso*propoxy)disilane |
| mm | millimeters | iPrOH | Isopropanol |
| GC | Gas chromatography | TCD | Thermal conductivity detector |
| MS | Mass spectrometer | Et | Ethyl |
| NMR | Nuclear Magnetic Resonance | DSC | Differential Scanning Calorimetry |
| FID | Flame ionization detector | | |

### Test Methods/Conditions:

Analytical sample preparations were performed in a glove-box under an argon atmosphere.

NMR: NMR experiments were performed on an Agilent 400 MHz NMR Spectrometer. The samples were dissolved in d⁶-benzene dried over sodium metal. ¹H NMR experiments were referenced to the residual benzene signal in the NMR spectrum. ²⁹Si NMR experiments were referenced to an internal standard associated with the instrument. All NMR tube caps were wrapped with parafilm M to inhibit the slow diffusion of air into the sample.

GC-TCD and GC-MS samples were made in a 1.5 mL GC vial sealed with a Teflon septum. 0.5 µL were drawn using a 1µL syringe and injected into an HP 6890 Series GC System connected to an HP 5973 Mass Selective Detector.

DSC: samples of hydrocarbyloxydisilane were loaded into an empty 20 µL SWISSI high pressure DSC crucible. The sample was loaded in an argon inert glove box and then sealed immediately in the glove box. The crucible was sealed using a press. The weight of the sample was compared after analysis to determine if sample was lost during the temperature ramp. The sample was loaded into and run on a Mettler Toledo TGA/DSC 1. A heat cool heat method was used whereby the DSC furnace was thermally equilibrated for 20 minutes at 35 °C then ramped from 35 to 400 °C at 10 °C/min thermally equilibrated for 20 min then ramped from 400 to 35 °C at 10 °C/min thermally equilibrated for 20 min then ramped from 35 to 400 °C at 10 °C/min thermally equilibrated for 20 min. The resultant heat flow signals were background subtracted using a blank pan that was run under the same conditions.

### EXAMPLE 1: Synthesis of 1,1,1-trimethoxydisilane.

MeOH (5.86 g, 7.4 mL) was dissolved in DiPB (10.14 g, 11.8 mL) and added dropwise over 2 hr to a vigorously stirring solution of DPDS (10.00 g, 62.0 mmol) diluted in DiPB (34.28 g, 40.0 mL) at 5.7 °C. During the addition, there was a maximum exotherm temperature of 7.0 °C and the evolution of gas (H₂). The solution was stirred for 15 minutes and then allowed to slowly warm to ambient temperature over 2 hours.

**Purification of TMODS.** The crude 1,1,1-trimethoxydisilane was distilled through a 30 cm Vigreux column to give 6.39 g of crude TMODS and distilled a second time through a 30 cm Vigreux column to give 1.20 g (7.9 mmol, 12.7 % yield) of TMODS. Additional minor amounts of other hydrocarbyloxydisilanes and alkoxysilanes were also recovered: trimethoxysilane, tetramethoxysilane, methoxydisilane, 1,1-dimethoxydisilane, tetramethoxydisilane, and hexamethoxydisilane.

### EXAMPLE 2: Synthesis of 1,1,1-Triethoxydisilane (TEODS).

In an inerted 1 L, 3-neck, full-jacketed flask (fitted with thermowell, gas adaptor, addition funnel, and magnetic stir bar) 100.7 g of pentane and 101.08 g of DPDS were added and then cooled to -18.0 C. To the addition funnel (stopcock closed), 86.66 g of anhydrous EtOH, diluted in 86.21 g pentane, was added. The EtOH/pentane solution was added to the DPDS solution dropwise over a 3 hour period. There was an exotherm during the addition. The temperature of the pot was maintained at -11 ±1 °C during the addition process. Little gas was observed during the first ¼ of the addition suggesting that the amine is the first substitution to occur. The final ¾ of the addition saw copious amounts of gas evolution (H₂). After the addition of the ETOH solution, the reaction mixture was allowed to warm to ambient temperature and then stirred for at least an additional 3 hr to allow the remaining EtOH to react. Any precipitate was filtered to give 315.22 g of crude TEODS.

**Distillation of 1,1,1-Triethoxydisilane.** The crude 1,1,1-triethoxydisilane was mixed with two other batches of crude TEODS (960.02 g crude total) and then placed in a 2 L, 3 neck flask (fitted with thermowell, gas adaptor, and magnetic stir bar) attached to a 5-tray Oldershaw distillation column attached to a distillation head cooled to -14 °C and a receiving flask with a side arm. The forecut of low-boilers was removed by heating between 24.6 to 82 °C at pressures of -67.7 to -94.8 kPa (10.4 to 14.7 kPa) [-20 to -28 in. (78.7 to 110.2 mm) Hg]. The remaining product was heated between 86 to 107 °C at pressure of -61.0 to -94.8 kPa (9.5 to 14.7 KPa) [-18 to -28 in. (70.9 to 110.2 mm) Hg]. 330.35 g of 97+% pure TEODS was obtained. Minor amounts of other ethoxy(di)silanes were also recovered: tetra- and pentaethoxydisilane, and tri- and tetramethoxysilane. The > 97% pure TEODS was analyzed with DSC.

### EXAMPLE 3: Synthesis of BODS

*t*-BuOH (4.65 g) was dissolved in n-pentane (7.10 g, 11.3 mL) and added over 20 minutes to a vigorously stirring solution of below ambient temperature DPDS (10.12 g, 62.7 mmol) diluted in *n*-pentane (20.7 g, 33.1 mL) at ambient temperature. The solution was stirred for 20 minutes and then allowed to slowly warm to ambient temperature over 2 hours.

**The distillation of BODS.** The reaction product was distilled through a 30 cm Vigreux column, twice, to give 1.68 g (12.5 mmol, 19.9 % yield) of BODS. Much of the product was lost in both the forecut and the heel of the distillation.

### EXAMPLE 4: Synthesis of 1,1-BBODS.

*t*-BuOH (5.87 g) was dissolved in pentane (12.10 g) was added to a vigorously stirring solution of 1,2-bis-diisopropylaminodisilane (10.32 g, 39.6 mmol) diluted in heptadecane (8.16 g) and n-pentane (10.00 g) at about 25 °C and stirred for 5 days. This gave a crude mixture of 1,1-BBODS and 1,2-BBODS The mixture was fractionally distilled, twice up to 130 °C using a 30 cm Vigreux column to give 1.03 g (5.0 mmol, 12.6 % yield) of 1,1-BBODS.

### Example 5. Synthesis of iPODS and (BiPODS).

A 15 mL scintillation vile was charged with 0.30 g of DPDS and 0.90 g of C₆D₆ and stirred, vigorously. iPrOH (0.11 g) was added dropwise over a minute during which vigorous bubbling occurred. The mixture was stirred for 1.5 h after complete addition, the bubbling had stopped. The crude mixture, which included iPODS and unreacted DPDS, consisted of 18.4 % iPODS and 26.7% BiPODS.

### EXAMPLE 6. Synthesis of BODS

To a 2 L round-bottom flask was loaded 269.3 g (2.51 mol) of o-toluidine. The flask was heated to 70 °C. Then 445.91 g (2.76 mol) of diisopropylaminodisilane (DPDS) was added dropwise at this temperature in 90 minutes. When the first ml of DPDS was added, bubbling was observed. During the addition of DPDS, the dark brown reaction mixture became almost colorless. After the addition, the reaction mixture was heated at 70 °C for 60 minutes. Diisopropylamine (DiPA) was distilled at the pot temperature of 70 °C under vacuum down to 81.2 kPa (24 inHg). The conversion of DPDS reached 90% (w/w) according to GC-FID analysis. The reaction mixture was distilled at 70 °C pot temperature under a deeper vacuum down to 76.5 kPa (26 inHg) to give 408 g crude o-toluidinodisilane (TDDS) containing 96.8% (w/w) TDDS. The crude TDDS was fractionally distilled through a 5-tray jacketed column at 92 °C pot temperature under full vacuum into 53.8 g of forecut, 323.3 g of product cut having 99.2% (w/w) purity in 76.9% (w/w) total yield and 25.0 g of pot residue. The product cut was analyzed with GC-FID for purity and DSC for thermal properties.

A solution of anhydrous t-butanol (3.98 g; 53.8 mmol) in 3.98 g of tetraethylene glycol dimethyl ether (TEGDME) was added at room temperature to 10.0 g (59.7 mmol) of TDDS. No exotherm was observed. The reaction mixture was heated at 60 °C for 2 hours. The GC-FID analysis showed a nearly quantitative conversion to t-butoxydisilane. The reaction mixture was fractionally distilled through a 6" Vigreux column to give a t-butoxydisilane product having 99.4% (w/w) GC-FID purity. The product was analyzed with ¹H NMR, GC-FID, GC-MS, and DSC.

## Claims

1. A method of making an hydrocarbyloxydisilane, the method comprising:
causing the reaction of
i) an hydrocarbylaminodisilane of formula (III)
(III) (R¹ₐ(H)₂₋ₐN)_{b}Si(H)_{3-b}Si(H)_{3-c}(N(H)₂₋ₐR¹ₐ)_{c}
where each a independently is 1 or 2, b is 1 to 3, c is 0 to 3, and each R¹ is independently is (C₁-C₁₀)hydrocarbyl, and
ii) an alcohol according to formula (II)
(II) R²OH;
where R² is hydrocarbyl having from 1 to 10 carbon atoms,
to form a product mixture comprising the hydrocarbyloxydisilane, wherein the hydrocarbyloxydisilane has the formula (IV)
(IV) Si₂(OR³)_{y}H_{6-y};
where y is 1-5 and R³ is hydrocarbyl having from 1 to 10 carbon atoms.

2. The method of claim 1, wherein the hydrocarbylaminodisilane is diisopropylaminodisilane or o-toluidinodisilane.

3. The method of claims 1 or 2, wherein the hydrocarbyloxydisilane is a hydrocarbyloxydisilane of formula (IV) wherein y is 2 to 4.

4. The method of claim 3, wherein the hydrocarbyloxydisilane is a hydrocarbyloxydisilane of formula (IV) wherein y is 3.

5. The method of claims 1 or 2, wherein the hydrocarbyloxydisilane is selected from the group consisting of 1,1,1-trimethoxydisilane, 1,1,1,2-tetramethoxydisilane, 1,1,1-triethoxysilane, 1,1,1,2-tetraethoxydisilane, 1,1,1,2,2-pentamethoxydisilane, t-butoxydisilane, 1,2-di-t-butoxydisilane, and 1,1-di-t-butoxydisilane.

6. The method of claim 1, wherein i) and ii) are combined with a solvent at a temperature below 25°C.

7. The method of claim 1, further comprising recovering the hydrocarbyloxydisilane.

8. The method of claim 7, wherein the hydrocarbyloxydisilane is recovered by distillation.

9. The method of claim 1, further comprising heating the hydrocarbyloxydisilane causing a rearrangement of the alkoxy groups of the hydrocarbyloxydisilane to form a rearranged hydrocarbyloxydisilane.

10. The method of claim 9, where the hydrocarbyloxydisilane is a 1,2-di-*t-*butoxydisilane and the rearranged hydrocarbyloxydisilane is 1,1-di-*t*-butoxydisilane.

## Patentansprüche

1. Verfahren zur Herstellung eines Hydrocarbyloxydisilans, wobei das Verfahren umfasst:
Bewirken der Umsetzung von
i) einem Hydrocarbylaminodisilan der Formel (III)
(III) (R¹ₐ(H)₂₋ₐN)_{b}Si(H)_{3-b}Si(H)_{3-c}(N(H)₂₋ₐR¹ₐ)_{c}
worin jedes a unabhängig 1 oder 2 ist, b 1 bis 3 ist, c 0 bis 3 ist, und jedes R¹ unabhängig (C₁-C₁₀)Hydrocarbyl ist, und
ii) einem Alkohol gemäß Formel (II)
(II) R²OH;
worin R² Hydrocarbyl mit 1 bis 10 Kohlenstoffatomen ist,
zwecks Bildung eines das Hydrocarbyloxydisilan umfassenden Produktgemischs, wobei das Hydrocarbyloxydisilan die Formel (IV) hat
(IV) Si₂(OR³)_{y}H_{6-y};
worin y 1-5 ist und R³ Hydrocarbyl mit 1 bis 10 Kohlenstoffatomen ist.

2. Verfahren nach Anspruch 1, wobei das Hydrocarbylaminodisilan Diisopropylaminodisilan oder o-Toluidinodisilan ist.

3. Verfahren nach Anspruch 1 oder 2, wobei das Hydrocarbyloxydisilan ein Hydrocarbyloxydisilan der Formel (IV) ist, wobei y 2 bis 4 ist.

4. Verfahren nach Anspruch 3, wobei das Hydrocarbyloxydisilan ein Hydrocarbyloxydisilan der Formel (IV) ist, wobei y 3 ist.

5. Verfahren nach Anspruch 1 oder 2, wobei das Hydrocarbyloxydisilan aus der Gruppe ausgewählt ist, die aus 1,1,1-Trimethoxydisilan, 1,1,1,2-Tetramethoxydisilan, 1,1,1-Triethoxysilan, 1,1,1,2-Tetraethoxydisilan, 1,1,1,2,2-Pentamethoxydisilan, *t-*Butoxydisilan, 1,2-Di-*t*-butoxydisilan und 1,1-Di-*t*-butoxydisilan besteht.

6. Verfahren nach Anspruch 1, wobei i) und ii) mit einem Lösungsmittel bei einer Temperatur unter 25°C kombiniert werden.

7. Verfahren nach Anspruch 1, das weiterhin Gewinnen des Hydrocarbyloxydisilans umfasst.

8. Verfahren nach Anspruch 7, wobei das Hydrocarbyloxydisilan durch Destillation gewonnen wird.

9. Verfahren nach Anspruch 1, das weiterhin Erhitzen des Hydrocarbyloxydisilans umfasst, wobei eine Umlagerung der Alkoxygruppen des Hydrocarbyloxydisilans bewirkt wird, um ein umgelagertes Hydrocarbyloxydisilan zu bilden.

10. Verfahren nach Anspruch 9, wobei das Hydrocarbyloxydisilan ein 1,2-Di-*t-*butoxydisilan ist und das umgelagerte Hydrocarbyloxydisilan 1,1-Di-*t*-butoxydisilan ist.

## Revendications

1. Procédé de préparation d'un hydrocarbyloxydisilane, le procédé comprenant les étapes consistant à:
causer la réaction
i) d'un hydrocarbylaminodisilane de formule (III)
(III) (R¹ₐ(H)₂₋ₐN)_{b}Si(H)_{3-b}Si(H)_{3-c}(N(H)₂₋ₐR¹ₐ)_{c}
où chaque a est indépendamment 1 ou 2, b est 1 à 3, c est 0 à 3 et chaque R¹ est indépendamment un hydrocarbyle en (Ci-Cio), et
ii) d'un alcool selon la formule (II)
(II) R²OH;
où R² est un hydrocarbyle ayant de 1 à 10 atomes de carbone,
pour former un mélange de produits comprenant l'hydrocarbyloxydisilane, dans lequel l'hydrocarbyloxydisilane a la formule (IV)
(IV) Si₂(OR³)_{y}H_{6-y};
où y est 1-5 et R³ est un hydrocarbyle ayant de 1 à 10 atomes de carbone.

2. Procédé selon la revendication 1, dans lequel l'hydrocarbylaminodisilane est du diisopropylaminodisilane ou du o-toluidinodisilane.

3. Procédé selon les revendications 1 ou 2, dans lequel l'hydrocarbyloxydisilane est un hydrocarbyloxydisilane de formule (IV) dans lequel y est 2 ou 4.

4. Procédé selon la revendication 3, dans lequel l'hydrocarbyloxydisilane est un hydrocarbyloxydisilane la formule (IV) dans lequel y est 3.

5. Procédé selon les revendications 1 ou 2, dans lequel l'hydrocarbyloxydisilane est sélectionné parmi le groupe constitué de 1,1,1-triméthoxydisilane, 1,1,1,2-tétraméthoxydisilane, 1,1,1-triéthoxysilane, 1,1,1,2-tétraéthoxydisilane, 1,1,1,2,2-pentaméthoxydisilane, *t*-butoxydisilane, 1,2-di-*t*-butoxydisilane et 1,1-di-*t*-butoxydisilane.

6. Procédé selon la revendication 1, dans lequel i) et ii) sont combinés avec un solvant à une température inférieure à 25 °C.

7. Procédé selon la revendication 1, comprenant en outre l'étape consistant à recueillir l' hydrocarbyloxydisilane.

8. Procédé selon la revendication 7, dans lequel l'hydrocarbyloxydisilane est recueilli par distillation.

9. Procédé selon la revendication 1, comprenant en outre l'étape consistant à chauffer l'hydrocarbyloxydisilane causant un réarrangement des groupes alcoxy de l'hydrocarbyloxydisilane pour former un hydrocarbyloxydisilane réarrangé.

10. Procédé selon la revendication 9, dans lequel l'hydrocarbyloxydisilane et un 1,2,di*t*-butoxydisilane et l'hydrocarbyloxydisilane réarrangé est du 1,1,di-*t*-butoxydisilane.
